# EUROPEAN PATENT APPLICATION

(11) **EP 0 961 040 A1**
(43) Date of publication of application: **01.12.1999**
(21) Application number: 98810465.9
(22) Date of filing: 19.05.1998
(51) Int. Cl.: F16B 12/50, F16B 12/20

(54) **Assembly of profiles to form a rigid frame.**

(71) Applicant: Cannon Builders Limited, Trafalgar Square, London WC2N 5BW (GB)
(72) Inventor: Bernasconi, Marino, 6982 Agno (CH)
(74) Representative: Fiammenghi-Domenighetti, Delfina

(57) **Abstract**

An assembly of profiles is described forming a frame for furniture or racking that can be joined to infill panels, consisting of primary elements (1) joined to secondary elements (2) perpendicular to them, in which each of the secondary elements (2) has L-shaped notches (2L) at the ends, and each of the primary elements (1) has L-shaped notches (1L) designed to enable the end sections (2L) of one or more secondary elements to be introduced into each of them: the two free sides (3, 4) of the L of the end section (2L) of a secondary element (2) and a notch (1L) of a primary element (1) have the same projection (h) and a primary element is joined to a secondary element by a fixing (5) which forces the free side (3) of the L of a secondary element (2L) into the cavity formed by the L sides of a notch (1L) of a primary element (1) and fixes it in this position; further grooves (6i) of appropriate profile provided on each element can hold the edge of an infill panel.

## Description

This invention comes under the technology sector relating to the construction of frames for furniture, racking, etc, using profiles joined together in an appropriate manner to this effect.

A wide range of profiles and systems to assemble them are used, and the result which engineers in the sector are trying to achieve in each instance if to produce a system that is easy to assemble and involves simple parts.

The assembly as per this invention offers considerable advantages compared to the current state of technology in terms of both simplicity of parts to be produced and the ease of their assembly; another positive aspect is the fact that the parts forming an assembly are also designed to enable any type of infill panel to be fixed to them, made of metal, resin, wood, glass or any other material.

Also, as can be inferred from the description below, all the profiles forming an assembly as per the invention are cut during preparation solely following planes perpendicular to their longitudinal axes, which means a substantial reduction in production costs, precision in construction and the simplest, most reliable form of assembly.

To achieve the advantages described above, the inventor has designed the subject of this invention, which consists in an assembly of profiles as per the preamble to the attached claim 1 characterised by the characterizing elements of the said claim.

The description below illustrates in greater detail a preferred example of construction of the invention, with reference to the attached drawings, which represent:
- Figure 1, 1A: enlarged view of the section of the junction point between one of the said primary elements and one of the said secondary elements perpendicular to them seen before and after tightening the fixing dowels;
- Figure 2: transverse section of a profile used for vertical installation for joining to several horizontal elements;
- Figure 3: transverse section of a profile used to join two elements aligned together, positioned on opposite sides perpendicular to it;
- Figure 4: partial sectional perspective view of a console made with an assembly of elements as per the invention.

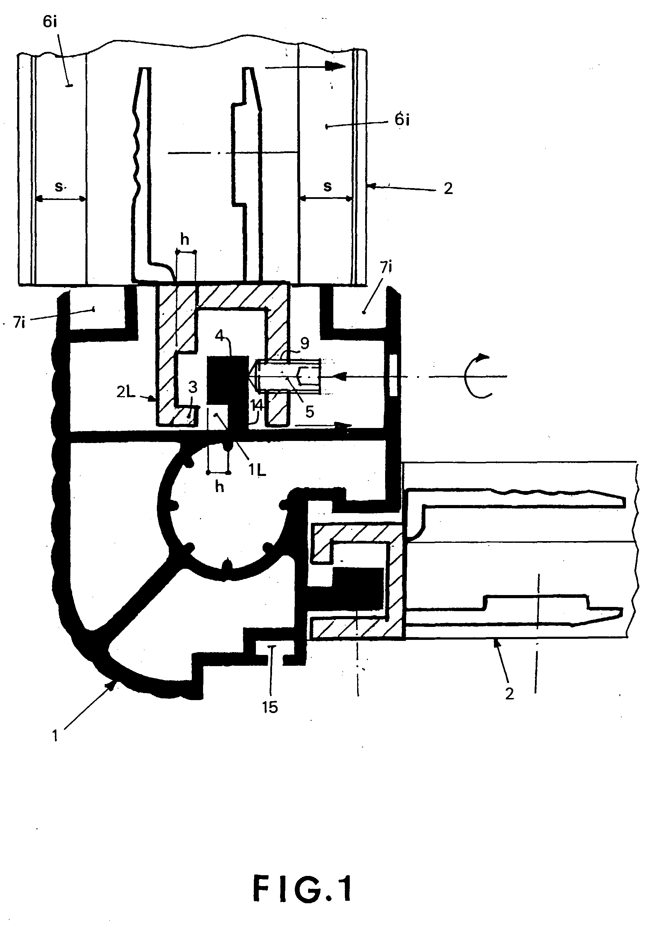

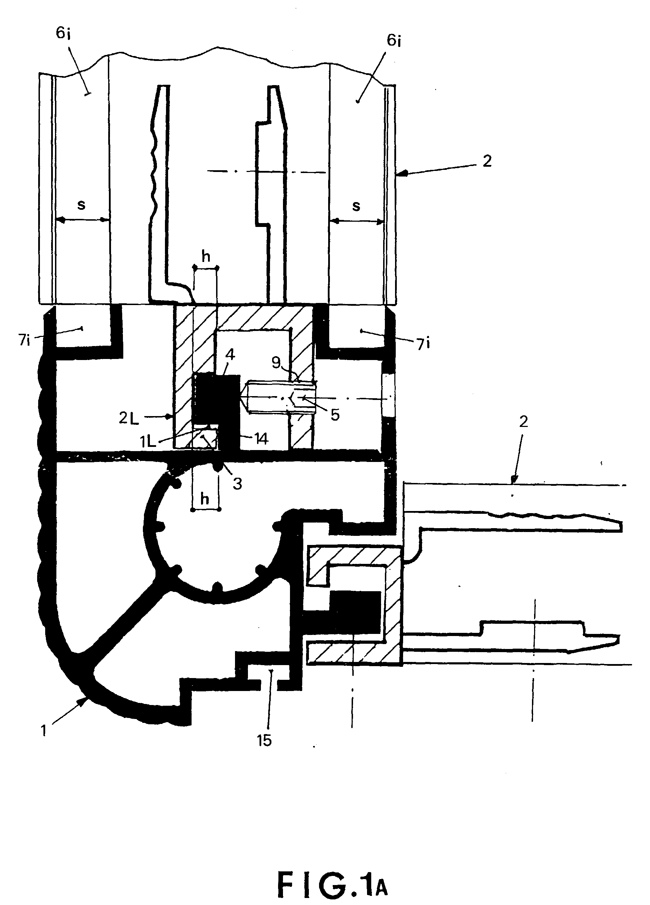

Looking at Figures 1 and 1A, it will be noted that the said primary and secondary elements 1 and 2 are shaped and joined together: in Figure 1, the various elements are positioned alongside each other in the position they are to be in on final assembly before tightening the fixings 5, and in Figure 1A, these same elements can be seen after the latter have been tightened.

In the abovementioned figures, it can seen that each of the said secondary elements 2 have L-shaped ends, and that each of the said primary elements 1 which are to be joined to them have notches 1L, over the entire length, each sized to contain one of the said end sections 2L of one of the secondary elements 2 in a perpendicular position alongside.

The free side 3 of the L of one end section 2L of one of the secondary elements 2 and the free side of the notch 1L of a primary element 1 to which it is joined are of the same height h, and the junction between the two elements is made by screwing and tightening the fixings 5 which, as they are tightened, forces the free side 3 of the L of the end section 2L of one of the said secondary elements 2 inside the cavity formed by the L-section sides 4, 14 of a notch 1L of a primary element 1, and presses it against one of these 14 in such a way as to remain fixed in this position to provide the required interlock between the said primary and secondary element 2, as shown in Figure 1A.

The fixing system preferred by the inventor due to its simplicity is shown in Figures 1 and 1A: the end section 2L of each secondary element 2 also has a fin 8, positioned opposite and perpendicular to the said free side 3 of the said L at a distance designed to enable passage between these of the free side 4 of the L notch 1L of one of the primary elements, and on each fin 8 there are one or more threaded holes 9 for screw-fixing an equivalent number of threaded dowels 5 (only one shown in the Figures), which, if pressed, during tightening, against the said free side 4 of the notch 1L, forces the free side 3 of the end section 2L of the secondary element 2 into the cavity formed by the two sides 4, 14 of the said notch 1L, holding it in this position due to tightening, thus providing fixing between the two elements.

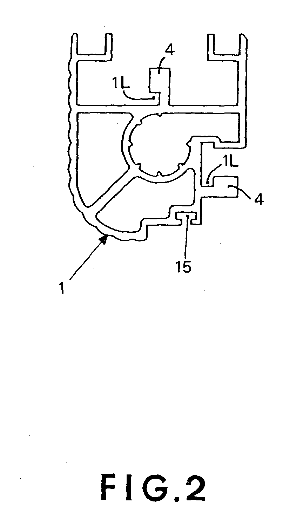

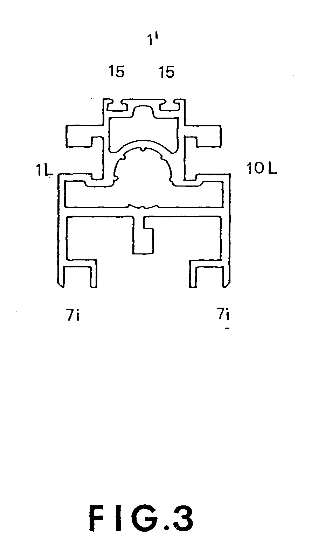

The shape of the said primary elements may be varied to suit requirements and the number of secondary elements with a different orientation intended to be joined to them; in the figures described, the primary element 1 is designed to act as a corner element to which two secondary elements perpendicular with each other are joined, and to this effect is provided with two notches 1L arranged with one perpendicular to the other as shown in Figure 2, but this primary element can be constructed with different profiles for different purposes: for example, in Figure 3, a primary element 11 is shown designed for joining and linking two secondary elements arranged with one on the extension of the other, and to this effect has two notches 1L likewise aligned on opposite sides of the said element 11.

One of the primary elements can of course be used to join three or even four secondary elements positioned perpendicular to each other and aligned in pairs. All that is required is to shape the section of the profile forming the primary elements appropriately, providing the requisite number of notches 1L and positioning these notches in a suitable manner.

Primary elements for joining three or four secondary elements are not shown in the Figures as the design and construction would be evident to an engineer in the sector after reading the description given thus far of assembly as per this invention.

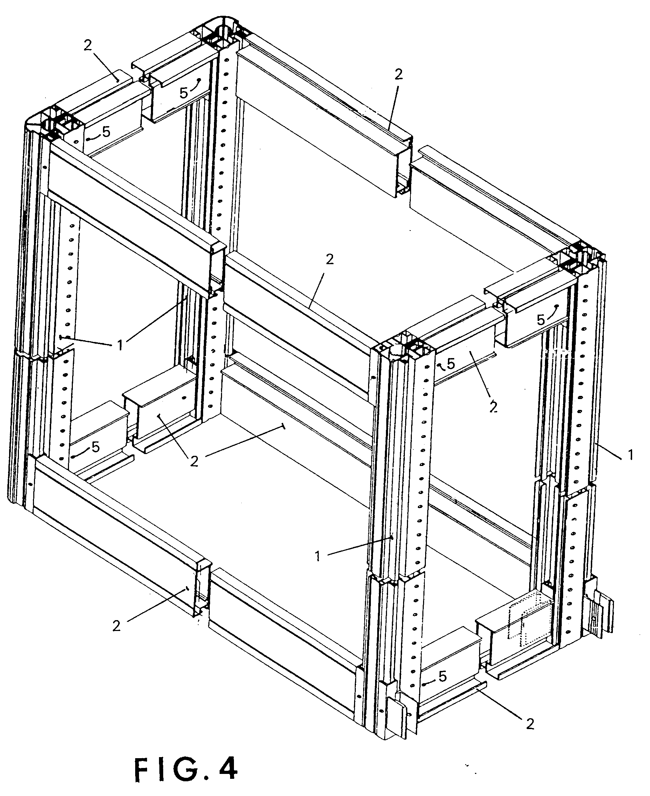

It is also pointed out that, as the assembly as per the invention can be used in particular for furniture and racking, similar for example to that shown in Figure 4, the said primary and secondary elements can have grooves 7i, 6i respectively of the required thickness S, profiled in such a way as to contain the outer edge of an infill panel (not shown) made of any material (wood, glass, resin, etc.). used normally for this purpose.

These panels can easily be applied *"*flush-mounted*"* as the assembly is being fitted together.

Further grooves 15 can also be provided in special cases to enable flexible seals to be fined.

The material preferred by the inventor is aluminium, but other materials suitable for this purpose can be used, especially synthetic resin and/or other types of metal.

The assembly as per the invention can be constructed with different forms and arrangements of the component parts from those described thus far and shown in the drawings, but following the instructions given in the attached claim 1; the structures thus obtained are also covered by the scope of protection provided by this application for patent, however.

## Claims

1. Assembly of profiles to form a rigid frame for furniture, racking and suchlike designed to be joined to infill panels, consisting of a number of primary elements (1, 1^{l}) each of which is joined to one or more secondary elements (2) perpendicular to them, whereby each of the said secondary elements (2) has an L-shaped end section (2L) at each end, and each of the said primary elements (1, 1^{l}) has several L-shaped notches (1L) designed to hold the said L-shaped end section (2L) of one or more secondary elements (2) arranged perpendicular to the primary elements (1), the two free sides (3, 4) of the L forming the said end section (2L) of a secondary element (2) and a notch (1L) of one of the primary elements (1, 1^{l}) respectively, with the same projection (h), the joint between a primary and a secondary element being obtained by means of fixings (5, 8, 9) designed to force the free side (3) of the L of the end section (2L) of one of the said secondary elements (2) into the cavity formed by the two L sides (4, 14) of a notch (1L) of one of the said primary elements (1, 1^{l}), and hold it in this position.

2. Assembly of profiles as per claim 1 in which the end section (2L) of each of the said secondary elements (2) also has a fin (8) positioned opposite and perpendicular to the free side (3) of the said L, at a distance designed to enable passage between these of the free side (4) of the L notch (1L) of one of the said primary elements (1), with one or more threaded through-holes (9) on each fin (8) for screw-fixing an equivalent number of dowels (5) or fixing bolts, which, during tightening, press against the said free side (4) of the L notch (1L) and force the free side (3) of the end section (2L) of one of the secondary elements (2) into the cavity formed by the two L sides (4, 14) of the said notch (1L), holding this fixed in this position due to tightening.

3. Assembly as per one of claims 1 or 2, in which each of the said primary elements (1^{l}) has two notches (1L, 10L) designed for joining to the end sections (2L) of an equivalent number of secondary elements (2).

4. Assembly as per one of claims 1 or 2, in which each of the said primary elements has three notches (1L) two of which are perpindicular to each other, and a third parallel to and/or on the extension of one of these, designed for joining to the end sections (2L) of three secondary elements (2).

5. Assembly of profiles as per one of the preceding claims, in which on each of the said primary elements (1, 1^{l}), and/or the said secondary elements (2) there is at least one groove (6i, 7i) of the required thickness (S) profiled such as to contain the outer edge of an infill panel.

6. Assembly as per one of the preceding claims, in which on one or more of the said primary (1, 1^{l}) and/or secondary (2) elements, there are also grooves (15) designed to enable seals of elastic material to be fitted.
